# EUROPÄISCHE PATENTSCHRIFT

(11) **EP 1 342 939 B1**
(45) Veröffentlichungstag und Bekanntmachung des Hinweises auf die Patenterteilung: **13.02.2008**
(21) Anmeldenummer: 03005089.2
(22) Anmeldetag: 07.03.2003
(51) Int. Cl.: F16H 61/02, F16H 61/16

(54) **Verfahren zur Steuerung von Automatikgetrieben in Spitzkehren und entsprechendes Automatikgetriebe.**
Control method for automatic transmissions in hairpin curves and corresponding automatic transmission.
Méthode de commande de transmissions automatiques dans un virage en épingle à cheveux et transmission automatique associée.

(30) Priorität: 08.03.2002 DE 10210336
(43) Veröffentlichungstag der Anmeldung: 10.09.2003
(73) Patentinhaber: ADAM OPEL AG, 65423 Rüsselsheim (DE)
(72) Erfinder: Klösel, Rainer, 63225 Langen (DE); Hangen, Götz, 55578 Wolfsheim (DE)

(56) Entgegenhaltungen:
- EP-A- 0 574 965
- US-A- 4 679 145
- US-A- 5 025 684
- US-A- 5 605 519

## Beschreibung

Die Erfindung bezieht sich auf ein Verfahren zur Steuerung eines Automatikgetriebes eines mit einer Antriebseinheit angetriebenen Kraftfahrzeugs gelöst, dessen Antriebseinheit mittels einer Leistungssteuereinheit, vorzugsweise eines Fahrpedals beeinflussbar ist, wobei die Antriebseinheit auf eine Getriebeeinheit einwirkt und eine Übersetzung der Getriebeeinheit durch eine Vorgabe eines Fahrprogramms von einer elektronischen Steuerung über eine Steuereinheit zur Ansteuerung der Getriebeeinheit eingestellt wird, und bei dem in Abhängigkeit einer Fahrpedaländerung und einer zeitlich danach einsetzenden Querbeschleunigung in vorbestimmbaren Fahrprogrammen eine Spitzkehre detektierbar ist, deren Erkennung eine zeitlich vorbestimmbare Konstanthaltung der Übersetzung der Getriebeeinheit und des Fahrprogramms bewirkt. Wei erhin bezieht sich die Erfindung auf ein Automatikgetriebe für mit einer Antriebseinheit angetriebene Kraftfahrzeuge.

Moderne Automatikgetriebe für Kraftfahrzeuge verfügen über intelligente Schaltprogramme, bei denen anhand von Messwerten die Fahrweise und die Straßenverhältnisse erkannt und bei der Steuerung des Automatikgetriebes berücksichtigt werden.

Eine übliche elektronische Steuerung benutzt zur Übersetzungsauswahl die allgemein bekannten Methoden der Fahrwiderstandserkennung. Diese Methoden sind allerdings nur in der Lage die augenblicklichen bzw. die vergangenen Fahrwiderstände zu detektieren und auszuwerten.

Bei diesen Steuerungen für Automatikgetriebe ergeben sich bei Kurvenfahrten auf bergigen Straßen Besonderheiten bzw. Probleme, insbesondere bei einer Spitzkehrenfahrt. Eine charakteristische Spitzkehre ist dadurch gekennzeichnet, dass nach einer Steigungsstrecke, kurz vor der eigentlichen Spitzkehre, der Straßenverlauf deutlich flacher wird. Nach der Spitzkehre beginnt dann wieder die Steigungsstrecke, die auf den ersten Metern mit zum Teil sehr steilen Steigungen beginnt. Das führt dazu, dass das Getriebe aus einem der Steigung vor der Spitzkehre angemessenen Bergfahrprogramm in den flacheren Beginn der Spitzkehre fährt und dort das augenblickliche ausgewählte Bergfahrprogramm verlässt. Da in der Spitzkehre typischer weise vom "Gas" gegangen wird, kann es auch, je nach Fahrprogramm zu einer Hochschaltung des Ganges oder der Übersetzung des Getriebes kommen. Am Ende der Spitzkehre befindet man sich dann für die folgende Steigung im falschen Gang und im falschen Fahrprogramm, was sich sehr negativ auf das Fahrverhalten auswirkt. Wenn diese folgende Steigung mit angemessener Fahrleistung bewältigt werden soll, wird erst nach einer Zeitverzögerung die dann aktuelle Steigung erkannt, das entsprechende Fahrprogramm ausgewählt und in den richtigen Gang geschaltet. Unangenehm und störend wirkt sich hierbei das unnötige Hoch- und Herunterschalten, sowie die zeitliche Verzögerung aus, bis das Getriebe herunter geschaltet wird.

Aus der DE 41 20 603 ist ein Verfahren bezüglich einer Kurvenfahrt bekannt, bei dem eine Hochschaltung nur dann zugelassen wird, wenn die Querbeschleunigung unterhalb eines Grenzwertes liegt. Hierbei handelt es sich um normale Kurven in flachen Gebieten.

Um auch bereits beim Heranfahren an flache Kurven Hochschaltungen gezielt verhindern zu können, wird bei dem Verfahren zur Steuerung eines selbsttätig schaltenden Getriebes nach der DE 39 22 040 A1 die Fahrpedaländerungsgeschwindigkeit erfasst und bei Unterschreiten eines bestimmten (negativen) Grenzwerts ein Signal zur Unterbindung eines Hochschaltvorgangs abgeleitet, sofern Schubbetrieb erkannt wird. Daraufhin werden Hochschaltungen unterbunden, bis wiederum Zugbetrieb auftritt und ein festgelegter Zeitraum verstrichen ist.

Eine eventuelle Kurvenfahrt in bergigem Gelände wird dabei ebenso wie das Problem einer Spitzkehrenfahrt nicht berücksichtigt. Es werden keine weiteren Werte, zur Feststellung um welche Art von Kurven es sich handelt, berücksichtigt. Eine Spitzkehre erfordert jedoch ein andere Steuerung des Getriebes, als eine normale Kurve, da nicht nur die Steigung innerhalb bzw. kurz vor der Kurve berücksichtigt werden muss, sondern auch der Winkel der Kurve, der viel spitzer ist, als bei üblichen Kurven. Außerdem folgt der Spitzkehre eine starke Steigung.

Nachteilig bei den bisherigen Vorrichtungen und Verfahren ist, dass mit den bekannten Methoden zur Fahrwiderstandserkennung nur die augenblicklichen und/oder die vergangenen Fahrwiderstände erkennbar sind.

Aus der US 4,679,145 A, die den nächstliegenden Stand der Technik repräsentiert, sind ein Verfahren und eine Vorrichtung zur Steuerung einer Kupplungs-Getriebe-Einheit bekannt, welches es ermöglicht, die Wahl der Schaltstufen durch einen Parameter, der aus den abgetasteten und abgespeicherten Werten der Fahrpedalstellung gewonnen wird, gezielt zu beeinflussen. Zusammen mit anderen Parametern, wie Querbeschleunigung, Verzögerung und Schubbetrieb wird die Getriebesteuerung an den Fahrstil des Fahrers und die gerade vorherrschende Verkehrssituation angepasst.

Aufgabe der Erfindung ist es, eine derartige Vorrichtung und ein derartiges Verfahren, mit denen das Fahrverhalten und/oder die Schalthäufigkeit bei Kraftfahrzeugen mit Automatikgetriebe insbesondere in bergigem Gelände verbessert wird, weiter zu optimieren.

Diese Aufgabe wird durch ein Verfahren (Anspruch 1) gemäß dem Oberbegriff bewirkt, das die folgenden Verfahrensschritte aufweist:
- Setzen eines Startzeitpunkts für eine Zeitdauer T1, wenn von der elektronischen Steuerung als Fahrprogramm ein Bergprogramm gewählt ist und die gewählte Übersetzung der Getriebeeinheit kleiner als ein Grenzwert GW 4 ist und eine negative Fahrpedaländerung kleiner als ein vorbestimmbarer Grenzwert GW 1 ist und
- Konstanthalten der Übersetzung des Getriebes und des Fahrprogramms innerhalb der Zeitdauer T1.

Der Erfindung liegt der Gedanke zu Grunde, dass sich eine Spitzkehrenfahrt anhand von charakteristischen Signalverläufen detektieren lässt. Dabei ist die Erfindung nicht auf die bloße Detektierung einer Spitzkehre beschränkt, sondern zeigt eine Möglichkeit zur Verbesserung des Schaltverhaltens während einer Spitzkehrenfahrt auf.

Eine Spitzkehre lässt sich anhand der charakteristischen Signalverläufe, insbesondere der Querbeschleunigung und des Fahrpedals, detektieren. Dabei unterscheiden sich die Signalverläufe deutlich von den Signalverläufen der Querbeschleunigung und des Fahrpedals von normalen flachen Kurven. Zusätzlich sind weitere Zustände notwendig, um eine Spitzkehre zu erkennen. Eine Spitzkehre tritt typischerweise in Bergfahrprogrammen auf. Außerdem befindet sich das Getriebe aufgrund der Steigung des bergigen Straßenverlaufs auch in einer niedrigen Übersetzung.

Erfindungsgemäß wird in Abhängigkeit der sequentiellen Änderung des Fahrprogramms und des Fahrpedals und zeitlicher Grenzwerte ein Straßenverlauf einer Spitzkehre erkannt, bei dem ein Wechsel des Fahrprogramms insbesondere in bzw. kurz vor einer Spitzkehre verhindert wird. Neben der Verhinderung einer Fahrprogrammänderung wird vorteilhafterweise auch ein Hochschalten verhindert, wodurch ein zeitaufwendiges und für die Insassen unangenehmes Hoch- und Herunterschalten verhindert wird.

Der Vorteil der Erfindung liegt im verbesserten Fahr- und insbesondere Schaltverhalten von Fahrzeugen mit Automatikgetriebe bei kurvenreichen Bergfahrten.

Vorzugsweise werden für den Fall, dass während des Ablaufs der Zeitdauer T1 die Querbeschleunigung über einem vorbestimmbaren Grenzwert liegt, ein Startzeitpunkt einer Zeitdauer T2 gestartet und die Übersetzung des Getriebes und das Fahrprogramm innerhalb der Zeitdauer T2 konstant gehalten. Wenn vorzugsweise innerhalb der vordefinierten Zeitdauern T1 und T2 eine Hochschaltung der Übersetzung und eine Fahrprogrammänderung in Fahrprogramme für Steigungen, die flacher als die vorherige Steigung sind (kleinere Bergprogramme) oder in ein Standardfahrprogramm unterbunden wird.

Die Aufgabe wird auch durch ein Automatikgetriebe (Anspruch 4) für mit einer Antriebseinheit angetriebene Kraftfahrzeuge gelöst, bei der die Antriebseinheit mittels einer Leistungssteuereinheit, vorzugsweise eines Fahrpedals beeinflussbar ist, wobei die Antriebseinheit auf die Getriebeeinheit einwirkt und eine Übersetzung der Getriebeeinheit durch eine Vorgabe eines Fahrprogramms von einer elektronischen Steuereinheit über eine Steuereinheit zur Ansteuerung der Getriebeeinheit einstellbar ist, mit einer Erfassungseinrichtung zur Aufnahme wenigstens eines Querbeschleunigungswertes, bei dem die gemessene Querbeschleunigung und eine Fahrpedaländerung der elektronischen Steuerung zuführbar sind und bei dem in Abhängigkeit des Fahrprogramms und der Übersetzung der Getriebeeinheit, einer negativen Fahrpedaländerung und der Querbeschleunigung eine Spitzkehre detektierbar ist und bei Detektion einer Spitzkehre das Fahrprogramm und die Übersetzung konstant bleiben, wobei Mittel zum Setzen eines Startzeitpunkts für eine Zeitdauer T1, wenn von der elektronischen Steuerung (11) als Fahrprogramm (P) ein Bergprogramm (Berg1, Berg2, Berg3) gewählt ist und die gewählte Übersetzung (G) der Getriebeeinheit (13) kleiner als ein Grenzwert GW 4 ist und eine negative Fahrpedaländerung (*neg_Fpdiff*) kleiner ist als ein vorbestimmter Grenzwert GW 1 ist, vorgesehen sind.

In einer vorteilhaften Ausgestaltung der Erfindung wird zusätzlich zu den oben erwähnten Werten bzw. charakteristischen Signalverläufen mittels wenigstens eines geeigneten Sensors die Neigung des Kraftfahrzeuges erfasst und bei der Auswahl der Fahrprogramme und der Übersetzungen für die Getriebeeinheit insbesondere bei einer Spitzkehrenfahrt berücksichtigt. Dadurch wird erreicht, dass eine Spitzkehre sicherer erkannt und auch die Beeinflussung der Steuerung sicherer erfolgt.

Wenn vorzugsweise bei Überschreitung/Unterschreitung vorbestimmbarer Grenzwerte der Querbeschleunigung und/oder der Fahrpedaländerung das Fahrprogramm und die Übersetzung konstant bleiben, ist eine für die in dem Fahrzeug befindlichen Personen besonders angenehme Betriebsweise des Automatikgetriebes möglich. Vorzugsweise erfolgt das Konstanthalten des Fahrprogramms und der Übersetzung in zeitlich vorbestimmbaren Grenzen. Vorzugsweise ist das Konstanthalten des Fahrprogramms auf vorbestimmbare Fahrprogramme eingeschränkt, so dass nur bei denjenigen Fahrprogrammen, bei denen es nötig ist, das Konstanthalten erfolgt. Vorzugsweise erfolgt das Konstanthalten des Fahrprogramms und der Übersetzung nur innerhalb vorbestimmbarer Neigungswerte.

Die Erfindung wird nachstehend ohne Beschränkung des allgemeinen Erfindungsgedanken anhand von Ausführungsbeispielen unter Bezugnahme auf die Zeichnungen exemplarisch beschrieben, auf die im übrigen bzgl. der Offenbarung aller im Text nicht näher erläuterten erfindungsgemäßen Einzelheiten ausdrücklich verwiesen wird. Es zeigen:
- Fig. 1: stark vereinfachter Aufbau eines Automatikgetriebes;
- Fig. 2: charakteristische Signalverläufe beim Durchfahren einer Spitzkehre;
- Fig. 3: erfindungsgemäßes Ablaufdiagramm zur Erkennung einer Spitzkehre; und
- Fig. 4: ein Diagramm zur beispielhaften Darstellung einer 1-2 bzw. 2-1 Schaltung für verschiedene Fahrprogramme.

In den Figuren und der folgenden Figurenbeschreibung sind gleiche Elemente mit denselben Bezugszeichen bezeichnet, so dass von einer erneuten Vorstellung jeweils entsprechend abgesehen wird.

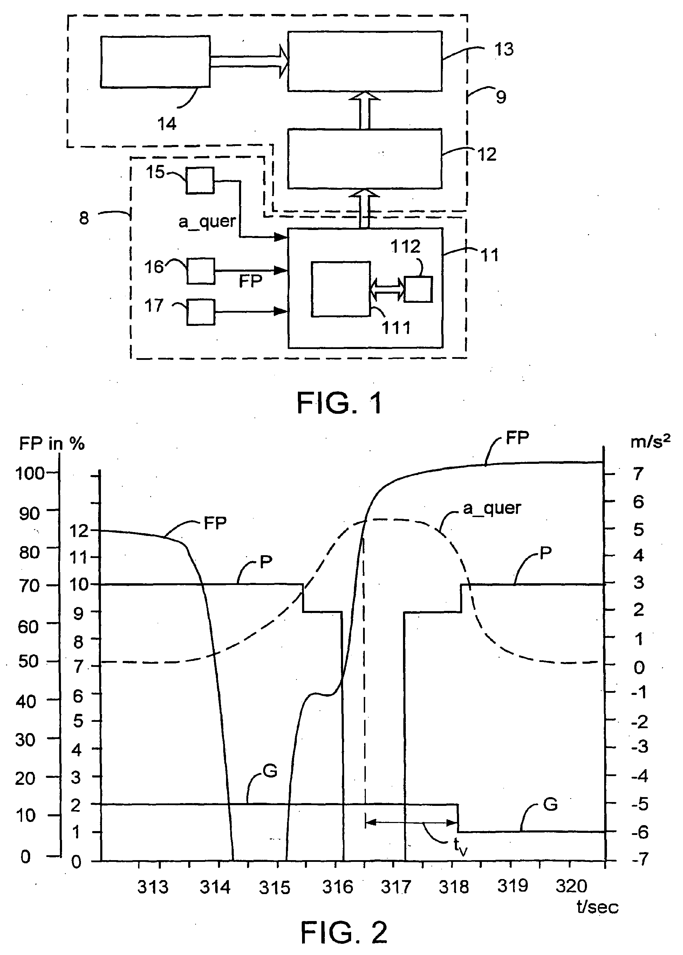

Figur 1 zeigt eine schematische Darstellung eines Automatikgetriebes. Das Automatikgetriebe umfasst einen mechanischen Teil 8 und einen elektronischen bzw. elektromechanischen Steuerungsteil 9. Der mechanische Teil 8 umfasst dabei eine Antriebseinheit 14, bspw. eine Brennkraftmaschine, die mit einer Getriebeeinheit 13 über eine Kupplung verbunden ist. Auf diese Getriebeeinheit 13 wirkt ein elektromechanisches Steuergerät 12, welches auch hydraulisch ausgeführt sein kann. Mittels des Steuergeräts 12 werden Steuerbefehle der elektronischen Steuerung 11 an die Getriebeeinheit 13 übermittelt. In Abhängigkeit des vom elektronischen Steuergerät 11 ermittelten Gangs G oder Übersetzung G der Getriebeeinheit 13 und des Fahrprogramms P werden im hydraulischen Steuergerät 12 entsprechend nichtdargestellte Stellglieder betätigt, die in der Getriebeeinheit 13 eine entsprechende Übersetzung mittels nicht dargestellter Zahnräder auswählen, die die von der Antriebseinheit 14 erzeugte Kraft über die entsprechend ausgewählte Übersetzung an die Räder des Kraftfahrzeuges weiterleiten. In der elektronischen Steuerung 11 ist wenigstens eine Speichereinheit 112 und ein Prozessor 111 angeordnet. Der elektronischen Steuerung 11 werden von Sensoren oder Erfassungseinheiten 15 -17 aufgenommene Messwerte zugeführt. Die Sensoren erfassen hier bspw. die Querbeschleunigung, wobei der Einfachheit wegen auf die Darstellung der Vielzahl der zur Berechnung der Querbeschleunigung notwendigen Messwerte verzichtet wird und nur die ermittelte Querbeschleunigung zugeführt wird. Ebenso ist es möglich, alle dafür notwendigen Messwerte der elektronischen Steuerung 11 zuzuführen und die Querbeschleunigung daraus zu berechnen. Weiter wird der Wert des Fahrpedals FP zugeführt, der entweder über einen gesonderten Sensor 16 aufgenommen wird oder von einer nichtdargestellten Motorsteuerung übernommen wird, da die Fahrpedalstellung für die Motorsteuerung und dort insbesondere für die Drosselklappenstellung erforderlich ist und damit ein Wert für das Fahrpedal und damit auch die Fahrpedaländerung schon vorliegt. Der elektronischen Steuerung 11 werden zusätzliche Messwerte 17, wie bspw. die Raddreh- oder Motordrehzahl, Drosselklappenstellung etc. zugeführt. Weiterhin kann mittels geeigneter Sensoren die Neigung des Fahrzeugs erfasst und der elektronischen Steuerung 11 des Automatikgetriebes zugeführt werden. Der sequentielle Verlauf des Neigungswertes kann zur Detektion einer Spitzkehre verwendet werden.

In Figur 2 sind charakteristische Signalverläufe während einer Spitzkehrenfahrt dargestellt. Anhand dieser charakteristischen Signalverläufe ist die elektronische Steuerung 11 in der Lage eine Spitzkehrenfahrt zu detektieren, so dass diese bei der Auswahl der Gänge entsprechend berücksichtigt werden kann. Die Kurven G für den gewählten Gang oder Übersetzung und P für das gewählte Fahrprogramm zeigen einen Verlauf ohne die erfindungsgemäße Erkennung einer Spitzkehre und der Beeinflussung der Steuerung.

Die gestrichelte Linie stellt das Signal *a*_*quer* für die Querbeschleunigung dar. Dieses Signal *a_quer* beschreibt die auftretende Querbeschleunigung im Verlauf der durchfahrenen Spitzkehre. Eine Spitzkehre oder Serpentine wird von einem flacheren Stück eingeleitet, bei der der Fahrer das Fahrpedal zurücknimmt, was sich in einem starken Abfall der Kurve *FP* aufgrund der Lastrücknahme kurz vor Beginn der Spitzkehre niederschlägt. Aus der Kurve *FP* kann eine Fahrpedaländerung (FPdiff) oder der Fahrpedalgradient abgeleitet werden. Die elektronische Steuerung 11 detektiert diese Lastrücknahme und wechselt das Fahrprogramm P von Bergprogramm 2 (P=10) für starke Steigungen nach Bergprogramm 1 (P=9) für flachere Steigungen und weiter sogar in das Standardfahrprogramm 0. Der Fahrprogrammwechsel ist durch die Kurve *P* dargestellt. P=0 entspricht der Standardprogrammkennlinie. An dieser Messung ist deutlich zu erkennen, dass ein Fahrprogrammwechsel von Bergprogramm 2 (P=10) nach Bergprogramm 1 (P=9) stattfindet. Die Übersetzung G des Getriebes im Bergprogramm 1 mit P=9 ist jedoch für die nach der Spitzkehre beginnende starke Steigung unzureichend, ebenso die des Standardfahrprogramms. Der Fahrer erkennt dies und erhöht intuitiv den Druck auf das Fahrpedal. Die elektronische Steuerung 11 erkennt, dass ein falscher Gang G oder eine falsche Übersetzung gewählt wurde und schaltet letztlich in das Fahrprogramm Bergprogramm 2 mit P= 10 für starke Steigungen. Erst mit diesem Fahrprogrammwechsel wird die Rückschaltung von Gang 2 nach Gang 1 durchgeführt, nachdem die elektronische Steuerung 11 u.a. aufgrund des Fahrpedalwertes von nahezu 100% sicher eine Steigung erkennt und das Bergprogramm 2 mit P=10 auswählt, so dass die nun anliegende Übersetzung des Getriebes der starken Steigung nach der Spitzkehre angepasst ist. Der im Getriebe wirksame gewählte Gang bzw. Übersetzung ist mit G bezeichnet. Mit tᵥ ist die Verzögerungszeit gekennzeichnet, die vom "Gasgeben" nach der Spitzkehre bis zur Rückschaltung von Gang 2 nach Gang 1 vergeht.

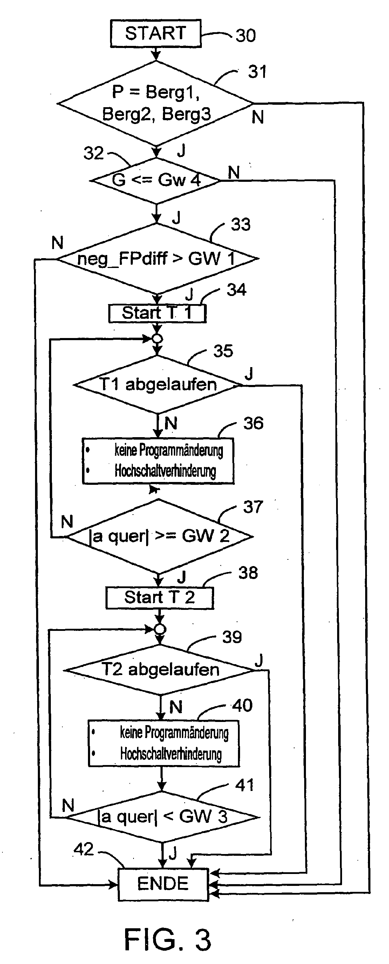

In Figur 3 ist ein Ablaufdiagramm dargestellt, welches zur Lösung der oben dargestellten Probleme erfindungsgemäß in der elektronischen Steuerung 11 implementiert ist und von dieser gestartet wird, um eine Spitzkehre zu detektieren und entsprechend auf das Automatikgetriebe einzuwirken.

Nach dem Start 30 wird im Schritt 31 überprüft, ob sich das Automatikgetriebe in einem Fahrprogramm Berg 1, Berg 2 oder Berg 3 befindet, denn grundsätzlich ist nur in diesen Fahrprogrammen ein Auftreten von Spitzkehren mit den oben beschriebenen Problemen möglich. Im Schritt 32 wird überprüft, ob der gewählte Gang G des Automatikgetriebes kleiner als ein festgelegter Grenzwert GW 4 ist. Dieser Grenzwert GW 4 kann 2 ggf. auch 3 für den Gang 2 oder Gang 3 sein. In Schritt 33 wird überprüft, ob eine negative Fahrpedaländerung *neg*_*FPdiff* vorliegt, die größer als ein Grenzwert GW 1 ist. Der vorab vorbestimmbare Grenzwert GW 1 wird in % / s angegeben.

Sind die Bedingungen von Schritt 31 bis 33 erfüllt, wird in Schritt 34 ein Timer T1 gestartet. Innerhalb der Zeit des Timers T1 (Schritt 35) werden Änderungen des Fahrprogramms P in kleinere Bergprogramme oder in das Standardprogramm unterbunden. Die Zeit T1 wird auch als Erkennungszeit für eine Spitzkehre bezeichnet. Ebenso wird auch eine Hochschaltung verhindert (Schritt 36). Danach wird in Schritt 37 überprüft, ob die Querbeschleunigung |*a_quer*| größer oder gleich einem Grenzwert GW 2 ist. Dieser Grenzwert GW 2 wird in m/s² angegeben. Ist die Querbeschleunigung |*a_quer*| niedriger als der Grenzwert GW 2, erfolgt ein Rücksprung zu Schritt 35, bei dem abgefragt wird, ob der Timer T1 abgelaufen ist. Ist diese Zeit T1 abgelaufen, erfolgt ein Sprung zum Ende des Programms und dadurch wieder in das Hauptprogramm. Wenn dieser Grenzwert GW2 jedoch überschritten ist, liegt eindeutig eine Spitzkehre vor, was im weiteren Verlauf zu weiteren Einschränkungen bei der Auswahl der Fahrprogramme P und der Gänge G führt. Dazu wird in Schritt 38 ein weiterer Timer T2 gestartet. Die Zeit T2 wird auch als Fahrprogrammänderungsverbotszeit bezeichnet. Solange dieser Timer T2 nicht abgelaufen ist (Schritt 39), wird im Schritt 40, wie bei Schritt 36, eine Änderungen des Fahrprogramms in kleinere Bergprogramme oder in das Standardprogramm unterbunden. Ebenso wird auch eine Hochschaltung verhindert (Schritt 40). Danach erfolgt im Schritt 41 wieder eine Überprüfung der Querbeschleunigung |*a_quer*|*.* Ist die Querbeschleunigung |*a_quer*| kleiner als ein Grenzwert GW3, der auch in m/s² angegeben wird, wird das Programm beendet. Ist die Querbeschleunigung |*a_quer*| größer als der Grenzwert GW 3 erfolgt ein Rücksprung zu Schritt 39.

Die Grenzwerte GW 1 bis GW 4 basieren auf Erfahrungswerten und werden in der Speichereinheit 112 der elektronischen Steuerung 11 abgelegt. Die Zeiten T1 und T2 liegen vorzugsweise im ms-Bereich.

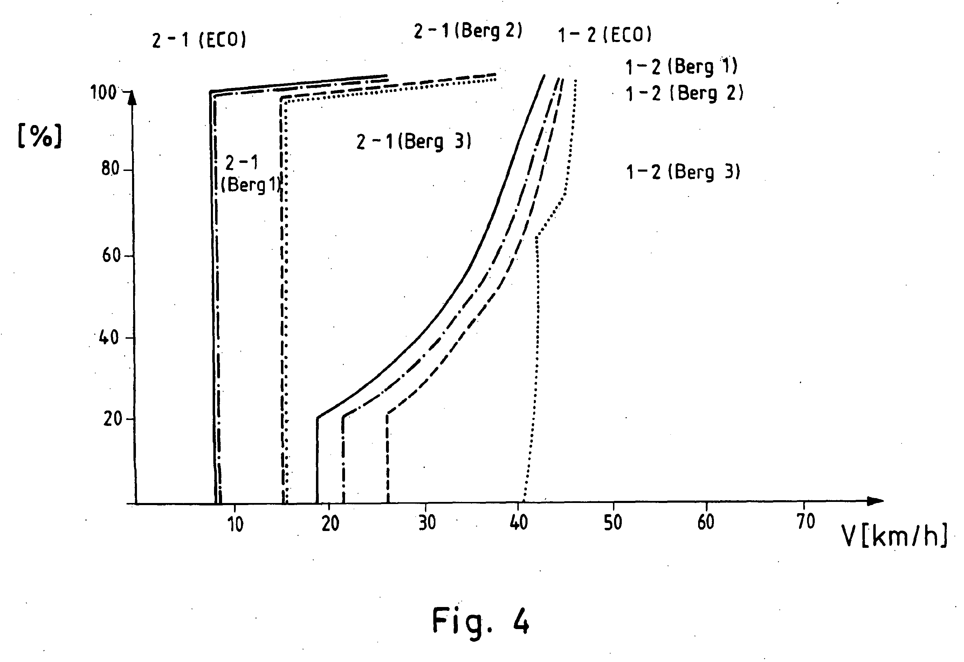

In Fig. 4 ist ein Diagramm dargestellt, das auf der Ordinate die Fahrpedalbetätigung in % angibt und auf der Abszisse die Geschwindigkeit V in km/h. Es sind die 1-2 und 2-1 Schaltung für verschiedene Fahrprogramme schematisch dargestellt. Die dargestellten Fahrprogramme sind ein ECO- Programm und drei Bergprogramme Berg 1, Berg 2 und Berg 3.

Anhand der 1-2 und 2-1 Schaltung gemäß der Fig. 4 kann exemplarisch für alle Schaltungstypen dargestellt werden, wie sich durch die Bergerkennung die Hoch- und Rückschaltpunkte verschieben. Mit größer werdendem Fahrwiderstand (größer werdender Steigung) werden Hochschaltungen (1-2 Schaltungen) zu größeren Geschwindigkeiten verschoben. Dadurch wird sichergestellt, das sich das Fahrzeug immer in einem Betriebspunkt mit entsprechenden und ausreichenden Beschleunigungsreserven befindet. Auch die Rückschaltpunkte (2-1 Schaltung) werden zu höheren Geschwindigkeiten verschoben, was dazu führt, das der Wagen früher zurückschaltet und entsprechende Beschleunigungsreserven bekommt.

### Bezugszeichenliste

- 8: mechanischer Teil des Automatikgetriebes
- 9: elektronischer/elektromechanischer Teil des Automatikgetriebes
- 11: elektronische Steuerung
- 111: Prozessor
- 112: Speicher
- 12: elektromechanische Steuereinheit
- 13: Getriebeeinheit
- 14: Antriebseinheit
- 15: Erfassungseinheit für Querbeschleunigung
- 16: Sensor für Fahrpedaländerung
- 17: Sensor für Neigung etc.
- 30: Start
- 31: Überprüfung Fahrprogramm P
- 32: Überprüfung aktueller Gang < GW 4
- 33: Überprüfung negative Fahrpedaländerung *neg_FPdiff*
- 34: Start Timer T1 (Erkennungszeit)
- 35: Überprüfung Timer T1 abgelaufen
- 36: Konstanthaltung P und G
- 37: Überprüfung Querbeschleunigung |*a_quer*| = GW 2
- 38: Start Timer T2 (Fahrprogrammänderungsverbotszeit)
- 39: Überprüfung Timer T2 abgelaufen
- 40: Konstanthaltung P und G
- 41: Überprüfung Querbeschleunigung |*a_quer*| < GW 3
- 42: Ende Unterprogramm Spitzkehre
- G: Gang bzw. Übersetzung
- P: Fahrprogramm
- FP: Fahrpedal
- a_quer: Querbeschleunigung
- FPdiff: Fahrpedaländerung oder Fahrpedalgradient
- neg_FPdiff: negative Fahrpedaländerung oder Fahrpedalgradient
- GW 1: Grenzwert für negative Fahrpedaländerung in %/s
- GW 2: Grenzwert für Querbeschleunigung m/s²
- GW 3: Grenzwert für Querbeschleunigung m/s²
- GW 4: Grenzwert für Übersetzung oder Gang G
- T1: Erkennungszeit
- T2: Fahrprogrammänderungsverbotszeit
- J: Bedingung erfüllt
- N: Bedingung nicht erfüllt
- Tᵥ: Verzögerungszeit bis zum Herunterschalten

## Patentansprüche

1. Verfahren zur Steuerung eines Automatikgetriebes eines mit einer Antriebseinheit (14) angetriebenen Kraftfahrzeugs, dessen Antriebseinheit (14) mittels einer Leistungssteuereinheit, vorzugsweise eines Fahrpedals (FP) beeinflussbar ist, wobei die Antriebseinheit auf eine Getriebeeinheit (13) einwirkt und eine Übersetzung (G) der Getriebeeinheit durch eine Vorgabe eines Fahrprogramms (P) von einer elektronischen Steuerung (11) über eine Steuereinheit (12) zur Ansteuerung der Getriebeeinheit eingestellt wird, wobei in Abhängigkeit einer Fahrpedaländerung (*FPdiff*) und einer zeitlich danach einsetzenden Querbeschleunigung (|*a_quer*|) in vorbestimmbaren Fahrprogrammen (P) eine Spitzkehre detektierbar ist, deren Erkennung eine zeitlich vorbestimmbare Konstanthaltung der Übersetzung (G) der Getriebeeinheit und des Fahrprogramms (P) bewirkt, **gekennzeichnet durch** die Verfahrensschritte:
- Setzen eines Startzeitpunkts für eine Zeitdauer T1, wenn von der elektronischen Steuerung (11) als Fahrprogramm (P) ein Bergprogramm (Berg1, Berg2, Berg3) gewählt ist und die gewählte Übersetzung (G) der Getriebeeinheit (13) kleiner als ein Grenzwert GW 4 ist und eine negative Fahrpedaländerung (*neg_Fpdiff*) kleiner als ein vorbestimmbarer Grenzwert GW 1 ist und
- Konstanthalten der Übersetzung des Getriebes und des Fahrprogramms innerhalb der Zeitdauer T1.

2. Verfahren nach Anspruch 1, **dadurch gekennzeichnet, dass** für den Fall, dass während des Ablaufs der Zeitdauer T1 die Querbeschleunigung über einem vorbestimmbaren Grenzwert GW 2 liegt, ein Startzeitpunkt einer Zeitdauer T2 gestartet wird und die Übersetzung des Getriebes und das Fahrprogramm innerhalb der Zeitdauer T2 konstant gehalten werden.

3. Verfahren nach Anspruch 2, **dadurch gekennzeichnet, dass** innerhalb der vordefinierten Zeitdauern T1 und T2 eine Hochschaltung der Übersetzung (G) und eine Fahrprogrammänderung in Fahrprogramme für Steigungen, die flacher als die vorherige Steigung sind oder in ein Standardprogramm unterbunden wird.

4. Automatikgetriebe für mit einer Antriebseinheit (14) angetriebene Kraftfahrzeuge, bei der die Antriebseinheit (14) mittels einer Leistungssteuereinheit, vorzugsweise eines Fahrpedals (FP) beeinflussbar ist, wobei die Antriebseinheit auf die Getriebeeinheit (13) einwirkt und eine Übersetzung (G) der Getriebeeinheit durch eine Vorgabe eines Fahrprogramms (P) von einer elektronischen Steuereinheit (11) über eine Steuereinheit (12) zur Ansteuerung der Getriebeeinheit einstellbar ist, mit einer Erfassungseinrichtung (15) zur Aufnahme wenigstens eines Querbeschleunigungswertes (|*a_quer*|), bei dem die gemessene Querbeschleunigung und eine Fahrpedaländerung (*FPdiff*) der elektronischen Steuerung (11) zuführbar sind, wobei in Abhängigkeit des Fahrprogramms und der Übersetzung der Getriebeeinheit, einer negativen Fahrpedaländerung (*neg_FPdiff*) und der Querbeschleunigung eine Spitzkehre detektierbar ist und bei Detektion einer Spitzkehre das Fahrprogramm und die Übersetzung konstant bleiben, **dadurch gekennzeichnet, dass** Mittel zum Setzen eines Startzeitpunkts für eine Zeitdauer T1, wenn von der elektronischen Steuerung (11) als Fahrprogramm (P) ein Bergprogramm (Berg1, Berg2, Berg3) gewählt ist und die gewählte Übersetzung (G) der Getriebeeinheit (13) kleiner als ein Grenzwert GW 4 ist und eine negative Fahrpedaländerung (*neg*_*Fpdiff*) kleiner ist als ein vorbestimmter Grenzwert GW 1 ist, vorgesehen sind.

5. Automatikgetriebe nach Anspruch 4, **dadurch gekennzeichnet, dass** bei Überschreitung/Unterschreitung vorbestimmbarer Grenzwerte (GW2,GW3) der Querbeschleunigung und/oder der Fahrpedaländerung das Fahrprogramm und die Übersetzung konstant bleiben.

6. Automatikgetriebe nach Anspruch 4, **dadurch gekennzeichnet, dass** das Konstanthalten des Fahrprogramms und der Übersetzung in zeitlich vorbestimmbaren Grenzen erfolgt.

7. Automatikgetriebe nach Anspruch 4, **dadurch gekennzeichnet, dass** das Konstanthalten des Fahrprogramms auf vorbestimmbare Fahrprogramme eingeschränkt ist.

8. Automatikgetriebe nach Anspruch 4, **dadurch gekennzeichnet, dass** das Konstanthalten des Fahrprogramms und der Übersetzung nur innerhalb vorbestimmbarer Neigungswerte erfolgt.

## Claims

1. Method of controlling an automatic transmission of a motor vehicle driven by a drive unit (14), which may be influenced by means of a power control unit, preferably an accelerator pedal (FP), wherein the drive unit acts upon a transmission unit (13) and a ratio (G) of the transmission unit is adjusted by a selection of a drive program (P) by an electronic controller (11) by means of a control unit (12) for controlling the transmission unit, wherein, in dependence upon an accelerator pedal change (*FPdiff*) and a transverse acceleration (|*a*_*quer*|) beginning thereafter, in predeterminable drive programs (P) a hairpin bend is detectable, the detection of which leads to the ratio (G) of the transmission unit and the drive program (P) being held constant for a predeterminable period of time, **characterized by** the method steps:
- setting a start time for a period T1 when the electronic controller (11) selects as drive program (P) an uphill program (Berg1, Berg2, Berg3) and the selected ratio (G) of the transmission unit (13) is lower than a limit value GW 4 and a negative accelerator pedal change (*neg*_*Fpdiff*) is smaller than a predeterminable limit value GW 1 and
- holding the ratio of the transmission and the drive program constant within the period T1.

2. Method according to claim 1, **characterized in that** for the case that during elapsing of the period T1 the transverse acceleration lies above a predeterminable limit value GW 2, a start time of a period T2 is started and the ratio of the transmission and the drive program are held constant within the period T2.

3. Method according to claim 2, **characterized in that** within the predefined periods T1 and T2 an upshift of the ratio (G) and a drive program change to drive programs for inclines, which are less steep than the previous incline, or to a standard drive program are prevented.

4. Automatic transmission for motor vehicles driven by a drive unit (14), in which the drive unit (14) may be influenced by means of a power control unit, preferably an accelerator pedal (FP), wherein the drive unit acts upon the transmission unit (13) and a ratio (G) of the transmission unit is adjustable by means of a selection of a drive program (P) by an electronic control unit (11) by means of a control unit (12) for controlling the transmission unit, comprising a detection device (15) for detecting at least one transverse acceleration value (|*a_quer*|)*,* in which the measured transverse acceleration and an accelerator pedal change (*FPdiff*) can be supplied to the electronic controller (11), wherein in dependence upon the drive program and the ratio of the transmission unit, a negative accelerator pedal change (*neg_FPdiff*) and the transverse acceleration a hairpin bend is detectable and upon detection of a hairpin bend the drive program and the ratio remain constant, **characterized in that** means are provided for setting a start time for a period T1 when the electronic controller (11) selects as drive program (P) an uphill program (Berg1, Berg2, Berg3) and the selected ratio (G) of the transmission unit (13) is lower than a limit value GW 4 and a negative accelerator pedal change (*neg_Fpdiff*) is smaller than a predetermined limit value GW 1.

5. Automatic transmission according to claim 4, **characterized in that** in the event of over-/undershooting of predeterminable limit values (GW2, GW3) of the transverse acceleration and/or of the accelerator pedal change the drive program and the ratio remain constant.

6. Automatic transmission according to claim 4, **characterized in that** the drive program and the ratio are held constant within predeterminable time limits.

7. Automatic transmission according to claim 4, **characterized in that** the holding constant of the drive program is limited to predeterminable drive programs.

8. Automatic transmission according to claim 4, **characterized in that** the drive program and the ratio are held constant only within predeterminable inclination values.

## Revendications

1. Procédé pour commander une transmission automatique d'un véhicule automobile entraîné avec une unité d'entraînement (14), dont l'unité d'entraînement (14) peut être influencée au moyen d'une unité de commande de puissance, de préférence une pédale d'accélérateur (FP), l'unité d'entraînement agissant sur une unité de transmission (13) et un rapport de multiplication (G) de l'unité de transmission étant réglé par une spécification d'un programme de conduite (P) par une commande (11) électronique au moyen d'une unité de commande (12) pour l'activation de l'unité de transmission, un virage en épingle à cheveux pouvant être détecté en fonction d'une variation de la pédale d'accélérateur (Fpdiff) et d'une accélération transversale (|*a_quer*|) commençant après cette variation dans des programmes de conduite (P) prédéfinissables, virage dont la détection entraîne un maintien à un niveau constant, qui peut être prédéfini dans le temps, du rapport de multiplication (G), de l'unité de transmission et du programme de conduite (P), **caractérisé par** les étapes de procédé suivantes :
- fixation d'un moment de démarrage pour une durée T1, lorsqu'un programme de montagne (montagne 1, montagne 2 et montagne 3) est choisi par la commande (11) électronique comme programme de conduite (P) et lorsque le rapport de multiplication (G) choisi de l'unité de transmission (13) est inférieur à une valeur limite GW 4 et qu'une variation négative de la pédale d'accélérateur (neg_Fpdiff) est inférieure à une valeur limite GW 1 prédéfinissable et
- maintien à un niveau constant du rapport de multiplication de la transmission et du programme de conduite dans les limites de la durée T1.

2. Procédé selon la revendication 1, **caractérisé en ce que**, dans le cas où l'accélération transversale se situe au-dessus d'une valeur limite (GW 2) prédéfinissable pendant l'écoulement de la durée T1, un moment de démarrage d'une durée T2 est démarré et le rapport de multiplication de la transmission et le programme de conduite sont maintenus à un niveau constant pendant la durée T2.

3. Procédé selon la revendication 2, **caractérisé en ce qu'**un passage en vitesse supérieure de la transmission (G) et une variation du programme de conduite dans des programmes de conduite pour des pentes qui sont plus plates que la pente antérieure ou dans un programme standard sont interdits dans les limites des durées T1 et T2 prédéfinies.

4. Transmission automatique pour véhicules automobiles entraînés avec une unité d'entraînement (14), sur laquelle l'unité de transmission (14) peut être influencée au moyen d'une unité de commande de puissance, de préférence d'une pédale d'accélérateur (FP), l'unité d'entraînement agissant sur l'unité de transmission (13) et un rapport de multiplication (G) de l'unité de transmission pouvant être réglé par une spécification d'un programme de conduite (P) allant d'une unité de commande (11) électronique à l'activation de l'unité de transmission en passant par une unité de commande (12), comprenant un dispositif de détection (15) pour la réception d'au moins une valeur d'accélération transversale (|*a_quer*|), sur laquelle l'accélération transversale mesurée et une variation de la pédale d'accélérateur (Fpdiff) peuvent être amenées à la commande (11) électronique, un virage en épingle à cheveux pouvant être détecté en fonction du programme de conduite et du rapport de la multiplication de vitesse de transmission, d'une variation négative de la pédale d'accélérateur (neg_Fpdiff) et de l'accélération transversale et le programme de conduite ainsi que le rapport de multiplication restant constants en cas de détection d'un virage en épingle à cheveux, **caractérisée en ce que** des moyens pour la fixation d'un moment de démarrage pour une durée T1 sont prévus lorsqu'un programme de montagne (montagne 1, montagne 2, montagne 3) est choisi par la commande (11) électronique comme programme de conduite (P) et **en ce que** le rapport de multiplication (G) choisi de l'unité de transmission (13) est inférieur à une valeur limite GW 4 et qu'une modification négative de la pédale d'accélérateur (neg_Fpdiff) est inférieure à une valeur limite (GW 1) prédéfinie.

5. Transmission automatique selon la revendication 4, **caractérisée en ce que**, en cas de dépassement/sous-dépassement de valeurs limites (GW 2, GW 3) prédéfinissables de l'accélération transversale et/ou de la variation de la pédale d'accélérateur, le programme de conduite et le rapport de transmission restent constants.

6. Transmission automatique selon la revendication 4, **caractérisée en ce que** le maintien à un niveau constant du programme de conduite et du rapport de multiplication s'effectue dans des limites prédéfinissables dans le temps.

7. Transmission automatique selon la revendication 4, **caractérisée en ce que** le maintien à un niveau constant du programme de conduite est limité à des programmes de conduite prédéfinissables.

8. Transmission automatique selon la revendication 4, **caractérisé en ce que** le maintien à un niveau constant du programme de conduite et du rapport de multiplication ne s'effectue que dans des limites de valeurs d'inclinaison prédéfinissables.
